# EUROPEAN PATENT SPECIFICATION

(11) **EP 0 975 862 B1**
(45) Date of publication and mention of the grant of the patent: **08.01.2003**
(21) Application number: 98915220.2
(22) Date of filing: 02.04.1998
(51) Int. Cl.: F02C 7/32, F02C 7/143, F02C 3/10, B64D 13/06, B64D 41/00

(54) **IMPROVED INTEGRATED ENVIRONMENTAL AND SECONDARY POWER SYSTEM**
VERBESSERTES INTEGRIERTES KLIMA- UND HILFSANTRIEBSAGGREGAT
SYSTEME INTEGRE AMELIORE SERVANT A L'ALIMENTATION SECONDAIRE ET A LA GESTION DES CONDITIONS AMBIANTES DE LA CABINE

(30) Priority: 18.04.1997 US 844485
(43) Date of publication of application: 02.02.2000
(73) Proprietor: Honeywell International Inc., Morristown, New Jersey 07962-2245 (US)
(72) Inventor: WOODHOUSE, Geoffrey, D., Presscott, AZ 86303 (US)
(74) Representative: Haley, Stephen
(86) International application number: US9806453
(87) International publication number: WO98048162

(56) References cited:
- CH-A- 252 210
- FR-A- 948 688
- US-A- 2 625 012
- US-A- 5 490 645

## Description

### TECHNICAL FIELD

This invention relates generally to aircraft subsystems, and more particularly to an aircraft subsystem that provides electricity and conditioned air to the aircraft independently of the main propulsion engines, thereby increasing the fuel efficiency of the engines.

### BACKGROUND OF THE INVENTION

In addition to propulsion, aircraft main engines also provide shaft power through a gearbox to drive electric generators, hydraulic pumps, and fuel pumps. They also provide pressurized air for the environmental control system, which uses this air to cool or heat, ventilate, and pressurize the aircraft cabin. The extraction of pressurized air and shaft power from the main engines is referred to as parasitic loss, and must be compensated for by increasing the fuel flow to the main engines. It has long been a goal of aircraft and aircraft engine designers to minimize or eliminate these parasitic losses, and thereby improve the fuel efficiency of the main engines. In particular, it has been recognized that the electrical generators and environmental control systems are the two largest sources of parasitic losses.

When the aircraft is on the ground and the main engines are shut down, many types of aircraft employ an auxiliary gas turbine engine to supply pressurized air for environmental control systems or main engine starting, and shaft horsepower to drive accessories such as an electric generator. Recent technological advances now enable these engines to be started and operated in-flight in an emergency such as a main engine shutdown, however, under normal in-flight operating conditions the burden of providing electricity and pressurized air still falls on the main engines.

Cronin, U.S. Pat. No. 4,494,372 discloses a multi-role primary/auxiliary power system for an aircraft that provides electrical, mechanical, and air conditioning power as well as main engine starting functions. Although this system eliminates the parasitic loss due the extraction of air from the main engine, it still needs mechanical power from the main engine to provide electrical power to the aircraft. Similarly, Cronin, U.S. Pat. No. 4,684,081 discloses a multifunction power system that combines an auxiliary power unit (APU), environmental control system, engine start system, and emergency power system for an aircraft. This system also does not require pressurized air from the engine, however, in the inflight cooling mode electrical power is extracted from the main engines to power the system.

Christoff, U.S. Pat. No. 4,503,666 discloses an integrated auxiliary power and environmental control unit having a power turbine and a cooling turbine mechanically coupled to a single compressor. However, inflight pressurized air from the main engines is still needed to operate the environmental control unit.

Woodhouse, U.S. Pat. No. 5,490,645, which is assigned to the assignee of this application,
discloses an aircraft subsystem which provides the aircraft with all its electrical and conditioned air requirements without requiring the extraction of either shaft power andlor pressurized air from the aircraft's main engines. At the core of this subsystem are two rotating assemblies journalled on non-oil lubricated bearings to a housing. One assembly includes a cooling turbine, a starter/generator, a core compressor, and a high pressure stage of a two stage axial turbine, all mounted on a single shaft. A combustor is disposed between the core compressor and turbine. The other assembly is comprised of the low pressure stage of the axial turbine coupled to a load compressor via a second shaft. The high pressure turbine stage and cooling turbine are sized to drive the core compressor and starter/generator which provides all the aircraft's electrical needs both on the ground and inflight. The low pressure turbine stage drives the load compressor, which produces pressurized air that is conditioned through heat exchange components and then expanded and cooled across the cooling turbine before being delivered to the aircraft cabin. Ram air ports provide inlet air to both the core compressor and load compressor.

However, ducting ram air to an auxiliary gas turbine engine has been shown to cause an increase in aircraft parasitic drag and a corresponding increase in aircraft fuel consumption. For an aircraft to be competitive, it is critical that specific fuel consumption be minimized. Although a system of the type described in Woodhouse eliminates the losses in main engine performance due to extraction of shaft power and pressurized air, a substantial amount of ram-air is ducted to the system, increasing the aircraft's parasitic drag and concomitantly increasing its specific fuel consumption.

Accordingly, there is still a need for an improved aircraft subsystem that eliminates main engine parasitic losses by providing both electricity and conditioned air to the aircraft independently of the main engines; and that substantially reduces adverse effects on aircraft parasitic drag and fuel consumption by reducing the flow of ram air ducted to the system.

### SUMMARY OF THE INVENTION

An object of the present invention is to provide an aircraft subsystem that eliminates main engine parasitic losses by providing both electricity and conditioned air for aircraft pressurization, thus increasing the fuel efficiency of the main propulsion engines.

Another object of the present invention is to increase the reliability of the main engines by eliminating the gearbox needed to drive accessories.

Another object of the present invention is to provide a subsystem with a reduced adverse effect on aircraft parasitic drag and fuel consumption, by reducing the flow of ram air ducted to the subsystem.

Still another object of the present invention is to provide an aircraft subsystem that employs non-oil lubricated bearings.

Yet another object of the present invention is to reduce the cost and weight of aircraft subsystems.

The present invention achieves the above-stated objectives by providing a novel integration of turbomachinery, heat transfer components and ducting systems into a single aircraft subsystem. The turbomachinery comprises three independently rotating assemblies: a low pressure module; a high pressure module; and a power module, each joumalled on non-oil lubricated bearings to a housing. The low pressure module includes a low pressure, (LP), compressor and a low pressure, (LP), turbine. The high pressure module includes a high pressure, (HP), compressor which receives compressed air from the LP compressor, an HP turbine which exhausts to the LP turbine, a combustor disposed between the HP compressor and HP turbine, and an electric starter motor. An intercooler is disposed between the LP compressor of the low pressure module and the HP compressor of the high pressure module to precool the air entering the HP compressor. The power module includes a power turbine driven by gas from the LP turbine, a load compressor, a shaft mounted generator, and a cooling turbine. The power turbine and cooling turbine are sized to drive the load compressor and the generator. The generator provides all the aircraft's electrical needs both on the ground and inflight. The load compressor produces pressurized air that is conditioned through heat exchange components and then expanded and cooled across the cooling turbine before being delivered to the aircraft cabin. The load compressor also supplies the required air for main engine starting. Importantly, the ram air requirements of the subsystem are substantially reduced over the prior art as a result of the high pressure ratio compression achieved through the two stage compression with intercooling, in conjunction with an optimized design of the engine air, load compressor air, heat exchanger air, and intercooler air ingestion and discharge systems.

Thus, the subsystem eliminates main engine parasitic losses by supplying the aircraft with all its electrical and conditioned air requirements, and reduces adverse effect on aircraft parasitic drag due to excessive ram air intake by providing a two stage high compression ratio system.

### BRIEF DESCRIPTION OF THE DRAWINGS

Fig. 1 is a schematic representation of an aircraft subsystem contemplated by the present invention.
Fig. 2 is a partially schematic partially cross-sectional view of the power producing portion of the aircraft subsystem of FIG. 1.
Fig. 3 is a cross sectional view of the power producing portion of the aircraft subsytem of Fig. 1.
Fig. 4 is a representation of the aircraft subsystem of Fig. 1 mounted in the tail compartment of an aircraft.
Fig. 5 is a perspective view of a dual version of the aircraft subsystem of Fig. 1.
Fig. 6 is a perspective view of a portion of the dual aircraft subsystem depicted in Fig. 5.

### DESCRIPTION OF THE PREFERRED EMBODIMENT

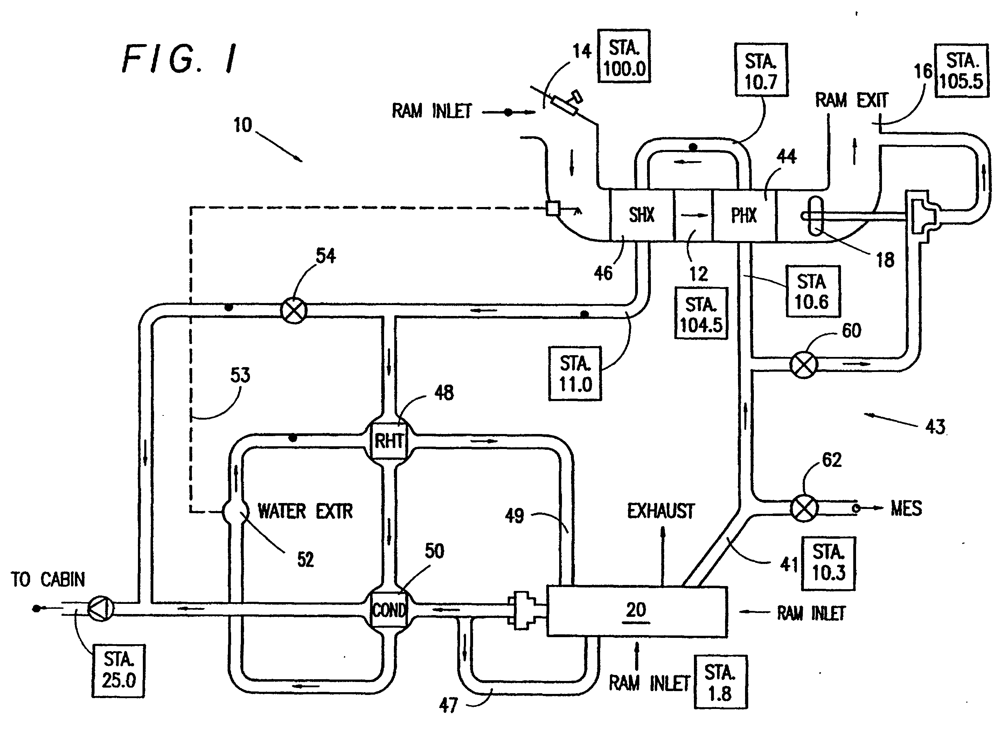

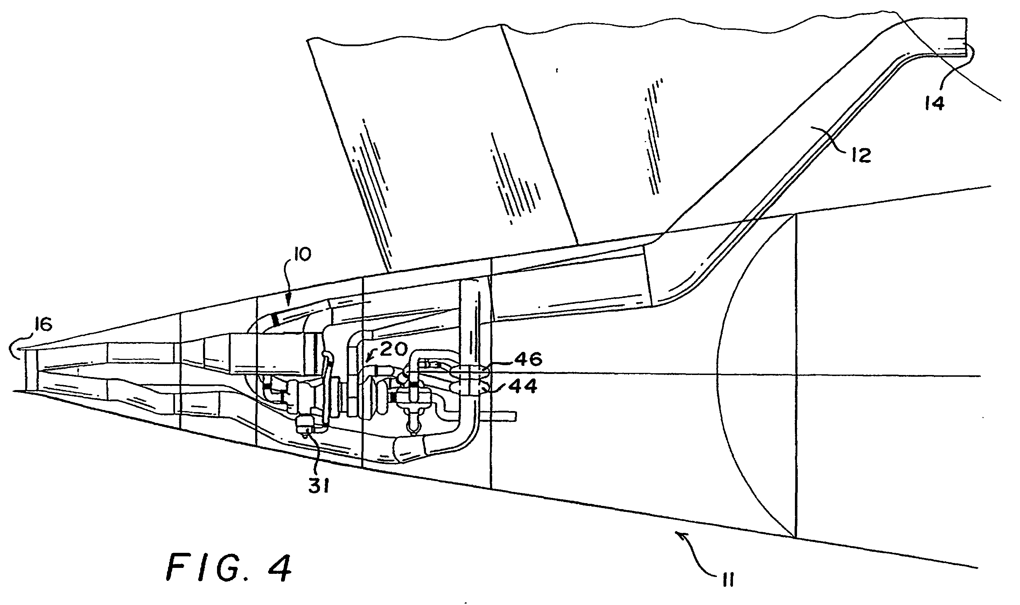

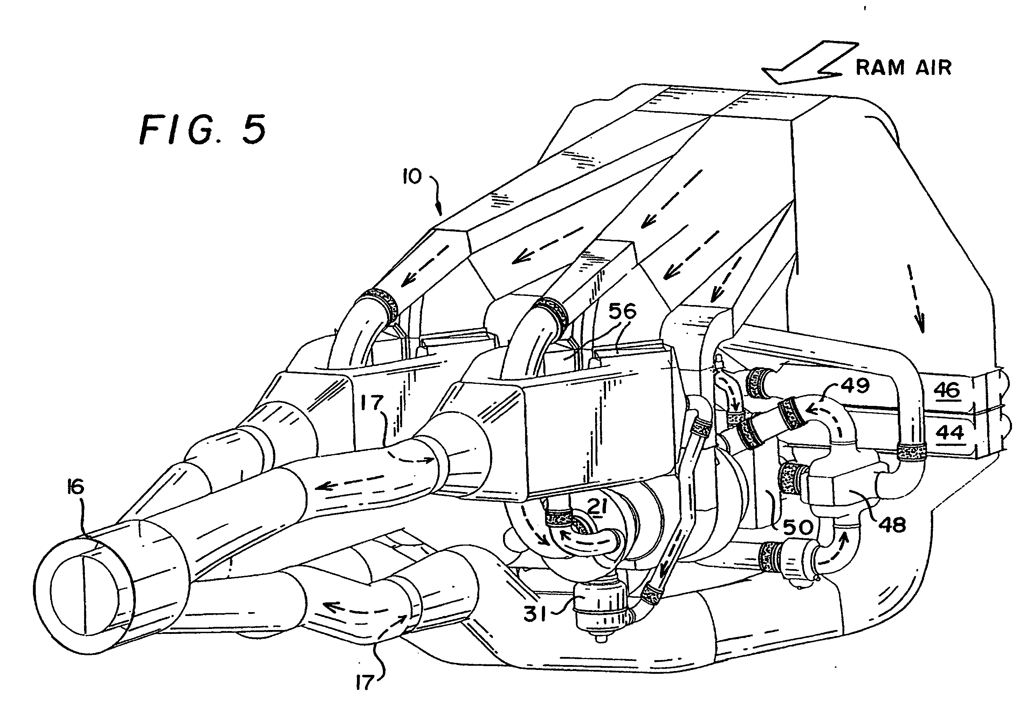

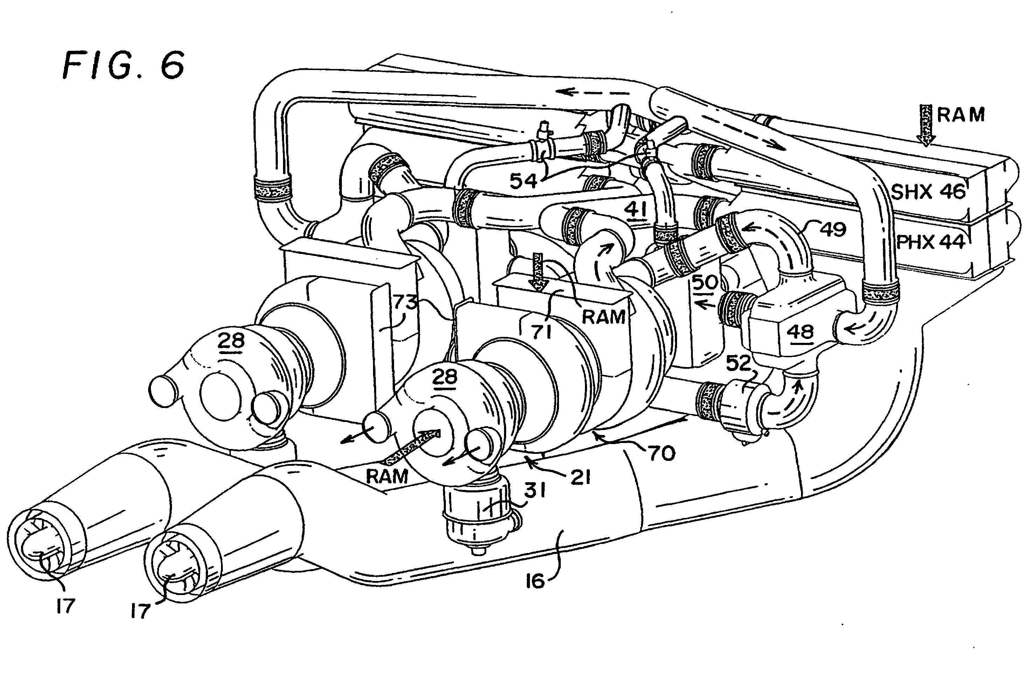

FIG. 4 shows an aircraft subsystem 10 mounted within the tail compartment 11 of an aircraft. The subsystem 10 includes a ram air duct 12 extending reward from a forward facing inlet 14, through the aircraft tail compartment 11 to an exit 16. Downstream of inlet 14, duct 12 divides into a plurality of smaller ducts which supply ram air to various portions of the subsystem. The smaller ducts recombine at the rear of the aircraft upstream of the single exit 16. The inlet 14 and exit 16 of the duct 12 are open to the atmosphere thus permitting a flow of air through the duct 12 when the aircraft is in motion. Referring to FIGS. 5 and 6, air is drawn through duct 12 during ground operation by operating electrically driven fans 17 located in duct 12 upstream of the exit 16. Alternatively as depicted in FIG. 1, an air turbine driven fan 18 disposed in the duct 12 may be utilized to generate air flow through duct 12.

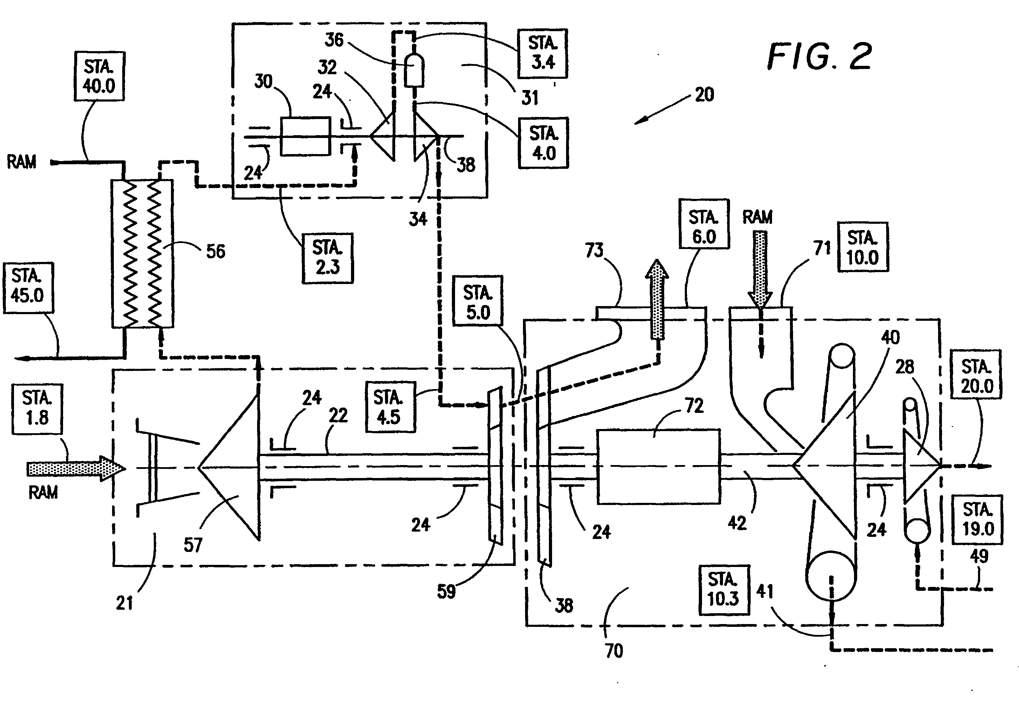

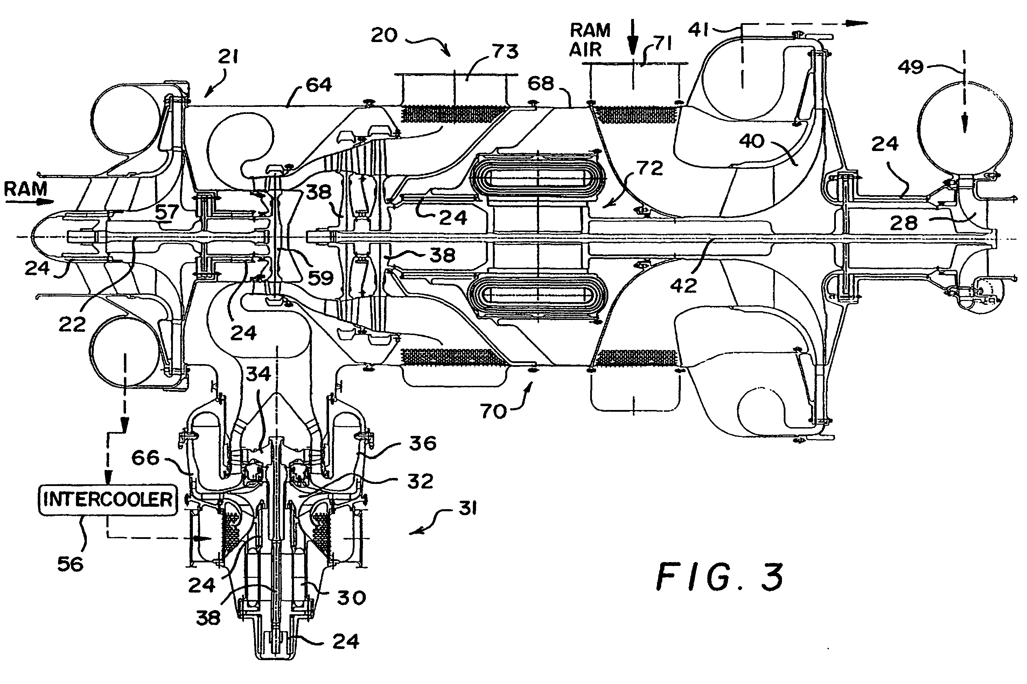

The subsystem 10 has a power section 20 comprised of a plurality of turbomachinery components. Referring to FIGS. 2, and 3 the power section 20 includes a low pressure, (LP), module 21, a high pressure, (HP), module 31, and a power module 70. The LP module 21 includes a shaft 22 journalled on non-oil lubricated bearings 24, such as air bearings or magnetic bearings, to a housing 64. Mounted on the shaft 22 are a centrifugal LP compressor 57, and a single stage axial LP turbine 59. The HP module 31 includes a shaft 38 similarly but independently journalled on non-oil lubricated bearings 24 to a housing 66. Mounted on shaft 38 are a centrifugal HP compressor 32, an electric starter motor 30, an HP turbine 34, and an annular combustor 36 disposed between the HP compressor 32 and HP turbine 34. An aluminum intercooler 56 is disposed between the LP compressor 57 of the LP module and the HP compressor 32 of the HP module. A portion of the ram air from duct 12 is ducted to intercooler 56 and utilized therein to precool the air compressed . by the LP compressor 57 before it enters the HP compressor 32. Importantly, because the intercooler is made of lightweight aluminum, the temperature of the air entering the intercooler must not exceed 505.4K (450°F). The temperature of the LP compressor discharge air, which is ducted through the intercooler, is determined by the compression ratio. Accordingly, the compression ratio of the LP compressor 57 must be limited to about 4.5 to 1 so that the temperature of the discharge air is acceptable.

The power module 70 includes a shaft 42 journalled independently from shafts 22 and 32, also on non-oil lubricated bearings 24 to a housing 68. Mounted on shaft 42 are a centrifugal load compressor 40 with an inlet 71, at least one axial power turbine 38 with exhaust 73, a centripetal cooling turbine 28, and a permanent magnet or switched reluctance type generator 72. A fuel pump (not shown), is driven by the generator 72 and pumps metered fuel from storage tanks aboard the aircraft to the combustor 36. An electrically or pneumatically driven hydraulic pump may be added to the system if the aircraft requires hydraulic power. The three modules of the power section 20 may be contained within a single housing, as generally depicted in FIG. 1, or more advantageously as depicted in FIG. 3 within individual detachable housings and provided with interconnecting ducting as shown in FIGS. 4-6 to form a compact overall configuration.

In operation, ram air is ingested by the LP compressor 57 and compressed. From compressor 57, the air is ducted through the intercooler 56 where its temperature is lowered, and then to the HP compressor 32. The compressed air leaving the HP compressor 32 mixes with fuel in the combustor 36 and the mixture is ignited to form a hot gas. The hot gas expands sequentially across the high pressure turbine 34, the low pressure turbine 59 and the power turbines 38, and finally exhausts overboard through exhaust 73. Importantly, because the high pressure turbine 34, the low pressure turbine 59 and the power turbines 38 are mounted on different shafts, they can be operated at different rotational speeds.

The load compressor 40 also ingests ram air from duct 12 through inlet 71 and compresses the air raising its temperature and pressure. Referring to FIGS. 1, 5 and 6, compressed air from the load compressor 40 flows into an environmental control system (ECS) 43 comprising a system of ducts and components where the compressed air is conditioned for use in an aircraft cabin. The ECS 43 is best understood through a description of its operation. Accordingly, air from compressor 40 flows through a conduit 41 to a primary air-to-air heat exchanger 44 and then to a secondary air-to-air heat exchanger 46 where it is cooled to near ambient temperature with very little pressure drop. Both heat exchangers 44, 46 use the ram air or fan forced air flowing through duct 12 as a heat sink. Ram air is utilized in flight, and for ground operation air is drawn through duct 12 by electrically driven fans 17. Air from the load compressor 40 can also be used for main engine starting, (MES), by opening valve 62.

From the secondary heat exchanger 46, the air flows through a reheater 48 where it is used as a heat sink and then to a condenser 50 where it is cooled while undergoing only a slight pressure drop. This results in condensation of almost all the moisture that may have been in the air stream. The condensed moisture is mechanically removed from the air stream by a water extractor 52 which centrifuges the water droplets out of the air and then drains the water through a conduit 53 into the duct 12 upstream of the secondary heat exchanger 46.

The cooled, dried air exiting the water extractor 52, passes back throughout the reheater 48 where it is heated, and then through a conduit 49 to the cooling turbine 28. In the turbine 28 the air is expanded to near atmospheric pressure and cooled to sub-freezing temperature. The cooling turbine also generates shaft power for driving the power module shaft 42. This cold air then circulates throughout the condenser 50 where it is used as a heat sink. The air then passes to a cabin of an aircraft. The temperature of the air entering the cabin is controlled by mixing it with warmer air taken from ducting connecting the secondary heat exchanger 46 and the reheater 48. The flow of this warmer air is controlled by a valve 54.

At least one cold air port (not shown) is provided in the ECS system at a suitable point downstream of the secondary heat exchanger 46. Air from the cold air port is ducted through a conduit 47 to the turbomachinery modules for providing cooling air to the non-lubricated bearings 24 if needed.

The novel configuration and integration of the turbomachinery and air handling components of the present invention provide several advantages. As best seen in FIG. 3, the high pressure module 31 is preferably not in concentric alignment with the other two modules 21 and 70. In a more conventional two stage compression configuration all the rotating components are concentrically aligned, and the HP components are grouped between the LP compressor and LP turbine. An advantage of the conventional configuration is that engine cross-sectional area is minimized. However, the conventional design suffers from inherent rotor dynamic limitations in large part due to the constraints on LP shaft length and diameter imposed by the HP rotating components contained therebetween.

In the present invention, the HP module is removed from the LP module enabling both modules to become more compact, resulting in improved rotor-dynamic characteristics, particularly for the LP module. More specifically, the compact design results in an increase in the shaft rotational speed at which undesirable, lower order, shaft resonances occur. Passing through a lower order resonance speed can result in large radially directed shaft loading being imparted to the bearings, potentially causing serious damage. The non-lubricated bearings 24 of the present invention are particularly susceptible to damage from excessive shaft loading, therefore it is important that the turbomachinery be designed so as to avoid the presence of lower order shaft resonances within the range of shaft speeds that occur during operation. The compact modular design of the present invention advantageously allows the rotating components to be operated at higher speeds, achieving a higher compression ratio, while avoiding potentially damaging shaft resonances. Physically separating the HP module 31 from the LP module 21 has the additional advantage of facilitating the use of the intercooler 56 between compression stages.

Importantly, the high ratio intercooled compression system of the present invention reduces ram air ingestion and concomitantly aircraft drag. In addition, the air handling systems depicted in FIGS. 1, and 4-6 comprising the ram air ducts 12 and the ECS air system 43, are also designed to minimize ram air ingestion. The air handling systems optimally control the flow of air into and out of the primary air using components, including the power section 20, the heat exchangers 44 and 46, and the intercooler 56. Moreover, through a unique integration of the high ratio compression system and optimally designed air handling systems, the present invention provides a highly efficient aircraft subsystem which minimizes ram air intake and total aircraft drag.

A computer model of a sub-system embodying the present invention installed on an aircraft was generated for predicting various subsystem performance parameters. The computer model may be used to predict parameters such as pressure or temperature at multiple locations (stations) throughout the subsystem, for any defined aircraft operating condition. An aircraft operating condition is determined by factors including aircraft altitude, speed (in Mach number), and air temperature. Tabulated in Examples 1 and 2 below are computer predictions of pressure, temperature, and mass flow, at various representative subsystem station locations (indicated in FIGS. 1 and 2), at two aircraft operating conditions. Examples 1 and 2 are included as merely representative of results achievable by the present invention, and are in no way to be construed as limiting its structure or function.

### EXAMPLE 1

Single Unit Operating, Altitude 13,106 m (43,000 ft), Mach number 0.82

| **Sta. No** | **Total Press.** | | **Total Temp.** | | **Phys. Flow** | |
|---|---|---|---|---|---|---|
| | **kPa** | **(psia)** | **K** | **(deg F)** | **kg/s** | **(lbm/sec)** |
| 1.8 | 24.61 | (3.57) | 270.3 | (26.8) | 0.200 | (4.41) |
| 2.1 | 114.25 | (16.57) | 451.9 | (353.7) | 0.200 | (4.41) |
| 2.3 | 110.80 | (16.07) | 288.4 | (59.5) | 0.200 | (4.41) |
| 3.4 | 490.29 | (71.11) | 480.8 | (405.8) | 0.163 | (3.60) |
| 4 | 470.71 | (68.27) | 1441.5 | (2135.0) | 0.188 | (4.15) |
| 4.5 | 221.67 | (32.15) | 1222.7 | (1741.1) | 0.199 | (4.38) |
| 5 | 115.28 | (16.72) | 1070.7 | (1467.5) | 0.199 | (4.38) |
| 6 | 21.37 | (3.10) | 735.5 | (864.2) | 0.205 | (4.53) |
| 10 | 24.61 | (3.57) | 270.3 | (26.8) | 0.271 | (5.97) |
| 10.3 | 206.84 | (30.00) | 545.3 | (521.8) | 0.271 | (5.97) |
| 10.6 | 203.33 | (29.49) | 545.3 | (521.8) | 0.271 | (5.97) |
| 10.7 | 197.19 | (28.60) | 372.6 | (211.0) | 0.269 | (5.94) |
| 11 | 188.57 | (27.35) | 298.7 | (78.0) | 0.237 | (5.23) |
| 19 | 178.78 | (25.93) | 294.8 | (70.9) | 0.235 | (5.17) |
| 20 | 82.67 | (11.99) | 241.8 | (-24.5) | 0.235 | (5.17) |
| 25 | 75.84 | (11.00) | 261.1 | (10.3) | 0.267 | (5.88) |
| 40 | 24.61 | (3.57) | 270.3 | (26.8) | 0.249 | (5.48) |
| 45 | 22.13 | (3.21) | 402.3 | (264.4) | 0.249 | (5.48) |
| 100 | 24.89 | (3.61) | 270.3 | (26.8) | 0.460 | (10.14) |
| 104.5 | 21.17 | (3.07) | 311.9 | (101.8) | 0.460 | (10.14) |
| 105.5 | 18.00 | (2.61) | 414.9 | (287.1) | 0.460 | (10.14) |

### EXAMPLE 2

Hot Day, Ground Operation, One Unit Operating

| **Sta. No** | **Total Press.** | | **Total Temp.** | | **Phys. Flow** | |
|---|---|---|---|---|---|---|
| | **kPa** | **(psia)** | **K** | **(deg F)** | **kg/s** | **(lbm/sec)** |
| 1.8 | 100.53 | (14.58) | 312.6 | (103.0) | 0.490 | (10.80) |
| 2.1 | 344.88 | (50.02) | 471.8 | (389.6) | 0.490 | (10.80) |
| 2.3 | 338.95 | (49.16) | 328.5 | (131.7) | 0.490 | (10.80) |
| 3.4 | 1138.32 | (165.10) | 498.0 | (436.8) | 0.400 | (8.82) |
| 4 | 1092.82 | (158.50) | 1290.4 | (1863.1) | 0.459 | (10.11) |
| 4.5 | 522.00 | (75.71) | 1079.8 | (1483.9) | 0.494 | (10.90) |
| 5 | 277.10 | (40.19) | 944.7 | (1240.7) | 0.494 | (10.90) |
| 6 | 106.52 | (15.45) | 762.0 | (911.9) | 0.511 | (11.27) |
| 10 | 100.53 | (14.58) | 312.6 | (103.0) | 0.598 | (13.19) |
| 10.3 | 462.22 | (67.04) | 513.0 | (463.7) | 0.598 | (13.19) |
| 10.6 | 454.99 | (65.99) | 513.0 | (463.7) | 0.598 | (13.19) |
| 10.7 | 442.51 | (64.18) | 377.0 | (219.0) | 0.597 | (13.16) |
| 11 | 423.13 | (61.37) | 325.4 | (126.0) | 0.597 | (13.16) |
| 19 | 393.00 | (57.00) | 319.6 | (115.6) | 0.579 | (12.77) |
| 20 | 122.45 | (17.76) | 242.1 | (-23.9) | 0.579 | (12.77) |
| 25 | 101.28 | (14.69) | 280.2 | (44.7) | 0.579 | (12.77) |
| 40 | 100.53 | (14.58) | 312.6 | (103.0) | 0.601 | (13.26) |
| 45 | 106.04 | (15.38) | 429.7 | (313.7) | 0.601 | (13.26) |
| 100 | 100.87 | (14.63) | 312.6 | (103.0) | 0.599 | (13.21) |
| 104.5 | 109.35 | (15.86) | 366.7 | (200.4) | 0.599 | (13.21) |
| 105.5 | 108.11 | (15.68) | 502.7 | (445.1) | 0.599 | (13.21) |

Thus, an improved aircraft subsystem is provided that eliminates main engine parasitic losses by providing both electricity and conditioned air to the aircraft independently of the main engines, and that substantially reduces adverse effects on aircraft parasitic drag and fuel consumption by reducing the flow of ram air ducted to the system.

## Claims

1. An aircraft subsystem comprising:
a first shaft (22) journalled for rotation to a first housing (64),
a first compressor (57) and a first turbine (59) mounted to said first shaft;
a second shaft (38) journalled for rotation to a second housing (66);
a second compressor (32) mounted to said second shaft and in fluid communication with said first compressor (57);
a second turbine (34) mounted to said second shaft and in fluid communication with said first turbine;
a combustor (36) disposed between said second compressor and said second turbine and in fluid communication therewith;
a third shaft (42) journalled for rotation to a third housing (68),
a third turbine (38) mounted to said third shaft and in fluid communication with said first turbine (59);
a third compressor(40) mounted to said third shaft and providing a flow of pressurized air;
a fourth turbine (28) mounted to said third shaft and in fluid communication with said third compressor for cooling said flow of pressurized air and providing said cooled air to said aircraft; and
an intercooler (56) disposed between said first compressor and said second compressor and in fluid communication therewith.

2. The subsystem of claim 1 further comprising a generator (72) for providing electricity to said aircraft mounted to said third shaft.

3. The subsystem of claim 1 wherein the temperature of said intercooler (56) does not exceed 450 degrees F (505.4 K).

4. The subsystem of claim 1 further comprising a heat exchanger (46) disposed between said third compressor and said fourth turbine, said heat exchanger being mounted in a ram duct (12) on said aircraft.

5. The subsystem of claim 4 wherein said intercooler (56) is mounted in said ram duct.

6. The subsystem of claim 5 further comprising at least one electrically driven fan mounted in said ram duct (12).

7. The subsystem of claim 5 further comprising at least one air turbine driven fan mounted in said ram duct (12).

8. The subsystem of claim 5 further comprising means for drying and cooling air in fluid communication with said heat exchanger (46) and said fourth turbine.

9. The subsystem of claim 1 wherein said first, second, and third shafts are journalled for rotation to said housings using non-oil lubricated bearings (24).

10. The subsystem of claim 9 wherein said non-oil lubricated bearings (24) are actively cooled by a supply of cool air.

## Patentansprüche

1. Flugzeug-Teilsystem, das Folgendes umfasst:
eine zur Drehung an einem ersten Gehäuse (64) gelagerte erste Welle (22);
einen ersten Kompressor (57) und eine erste Turbine (59), die an der ersten Welle angebracht sind;
eine zur Drehung an einem zweiten Gehäuse (66) gelagerte zweite Welle (38) ;
einen an der zweiten Welle angebrachten zweiten Kompressor (32), der mit dem ersten Kompressor (57) in Strömungsverbindung steht;
eine an der zweiten Welle angebrachte zweite Turbine (34), die mit der ersten Turbine in Strömungsverbindung steht;
eine zwischen dem zweiten Kompressor und der zweiten Turbine angeordnete und damit in Strömungsverbindung stehende Brennkammer (36);
eine zur Drehung an einem dritten Gehäuse (68) gelagerte dritte Welle (42);
eine an der dritten Welle angebrachte und mit der ersten Turbine (59) in Strömungsverbindung stehende dritte Turbine (38);
einen an der dritten Welle angebrachten und einen Druckluftstrom liefernden dritten Kompressor (40);
eine an der dritten Welle angebrachte und mit dem dritten Kompressor in Strömungsverbindung stehende vierte Turbine (28) zur Kühlung des Druckluftstroms und zur Versorgung des Flugzeugs mit gekühlter Luft; und
einen zwischen dem ersten Kompressor und dem zweiten Kompressor angeordneten und damit in Strömungsverbindung stehenden Zwischenkühler (56).

2. Teilsystem nach Anspruch 1, weiterhin mit einem an der dritten Welle angebrachten Generator (72) zur Versorgung des Flugzeugs mit Elektrizität.

3. Teilsystem nach Anspruch 1, bei dem die Temperatur des Zwischenkühlers (56) 450°F (505,4 K) nicht übersteigt.

4. Teilsystem nach Anspruch 1, weiterhin mit einem Wärmetauscher (46), der zwischen dem dritten Kompressor und der vierten Turbine angeordnet und in einem Stauluftkanal (12) am Flugzeug angebracht ist.

5. Teilsystem nach Anspruch 4, bei dem der Vorkühler (56) in dem Stauluftkanal angebracht ist.

6. Teilsystem nach Anspruch 5, weiterhin mit mindestens einem im Stauluftkanal (12) angebrachten elektrisch angetriebenen Gebläse.

7. Teilsystem nach Anspruch 5, weiterhin mit mindestens einem im Stauluftkanal (12) angebrachten druckluftturbinenangetriebenen Gebläse.

8. Teilsystem nach Anspruch 5, weiterhin mit einem Mittel zum Trocknen und Kühlen von mit dem Wärmetauscher (46) und der vierten Turbine in Strömungsverbindung stehender Luft.

9. Teilsystem nach Anspruch 1, bei dem die erste, zweite und dritte Welle unter Verwendung von ölfrei geschmierten Lagern (24) zur Drehung an den Gehäusen gelagert sind.

10. Teilsystem nach Anspruch 9, bei dem die ölfrei geschmierten Lager (24) durch eine Kaltluftversorgung aktiv gekühlt werden.

## Revendications

1. Sous-système d'aéronef, comprenant :
un premier arbre (22) tourillonné à rotation sur un premier carter (64),
un premier compresseur (57) et une première turbine (59) montés sur ledit premier arbre ;
un deuxième arbre (38) tourillonné à rotation sur un deuxième carter (66);
un deuxième compresseur (32) monté sur ledit deuxième arbre et en communication fluide avec ledit premier compresseur (57);
une deuxième turbine (34) montée sur ledit deuxième arbre et en communication fluide avec ladite première turbine ;
une chambre de combustion (36) disposée entre ledit deuxième compresseur et ladite deuxième turbine et en communication fluide avec ceux-ci ;
un troisième arbre (142) tourillonné à rotation sur un troisième carter (68) ;
une troisième turbine (38) montée sur ledit troisième arbre et en communication fluide avec ladite première turbine (59) ;
un troisième compresseur (40) monté sur ledit troisième arbre et fournissant un courant d'air sous pression ;
une quatrième turbine (28) montée sur ledit troisième arbre et en communication fluide avec ledit troisième compresseur en vue de refroidir ledit courant d'air sous pression et de fournir ledit air refroidi audit aéronef ; et
un réservoir réfrigérant intermédiaire (56) disposé entre ledit premier compresseur et ledit deuxième compresseur et en communication fluide avec ceux-ci.

2. Sous-système selon la revendication 1, comprenant en outre un générateur (72) en vue de fournir de l'électricité audit aéronef, monté sur ledit troisième arbre.

3. Sous-système selon la revendication 1, dans lequel la température dudit réservoir réfrigérant intermédiaire (56) ne dépasse pas 450°F (505,4 K).

4. Sous-système selon la revendication 1, comprenant en outre un échangeur de chaleur (46) disposé entre ledit troisième compresseur et ladite quatrième turbine, ledit échangeur de chaleur étant monté dans une conduite d'air dynamique (12) sur ledit aéronef.

5. Sous-système selon la revendication 4, dans lequel ledit réservoir réfrigérant intermédiaire (56) est monté dans ladite conduite d'air dynamique.

6. Sous-système selon la revendication 5, comprenant en outre au moins un ventilateur à entraînement électrique, monté dans ladite conduite d'air dynamique (12).

7. Sous-système selon la revendication 5, comprenant en outre au moins un ventilateur entraîné par turbine, monté dans ladite conduite d'air dynamique (12).

8. Sous-système selon la revendication 5, comprenant en outre des moyens de séchage et de refroidissement d'air en communication avec ledit échangeur de chaleur (46) et ladite quatrième turbine.

9. Sous-système selon la revendication 1, dans lequel lesdits premier, deuxième et troisième arbres sont tourillonnés à rotation sur lesdits carters à l'aide de paliers (24) non graissés à l'huile.

10. Sous-système selon la revendication 9, dans lequel lesdits paliers (24) non graissés à l'huile sont activement refroidis par une alimentation en air froid.
